# EUROPÄISCHE PATENTANMELDUNG

(11) **EP 1 530 901 A1**
(43) Veröffentlichungstag der Anmeldung: **18.05.2005**
(21) Anmeldenummer: 04020798.7
(22) Anmeldetag: 01.09.2004
(51) Int. Cl.: A21B 3/04, F28B 1/06, F28B 11/00

(54) **Verfahren und Vorrichtung zum Kondensieren von Inhaltsstoffen aus der Abluft eines Gargerätes**

(30) Priorität: 14.11.2003 DE 20317601 U
(71) Anmelder: ELOMA GmbH BEDARFSARTIKEL ZUR GEMEINSCHAFTSVERPFLEGUNG, D-82216 Maisach (DE)
(72) Erfinder: Mittermeier, Andreas, 82256 Fürstenfeldbruck (DE); Resch, Erwin, 86947 Weil (DE); Hillmann, Johannes, 89233 Neu-Ulm (DE)
(74) Vertreter: Strobel, Wolfgang, Dipl.-Ing.

(57) **Zusammenfassung**

Die vorliegende Erfindung betrifft ein Verfahren zum Kondensieren von Inhaltsstoffen aus der Abluft eines Gargerätes, insbesondere eines Dampfgargerätes, und Abführen der Flüssigkeit, mit den folgenden Schritten:
- Zuführen der Abluft über eine Zuführleitung zu einer Wärmetauschereinrichtung,
- Kondensieren von Inhaltsstoffen der Abluft, zumindest größtenteils, in der Wärmetauschereinrichtung mittels eines Umgebungsluftstromes, und
- Abführen der Abluft aus der Vorrichtung,
wobei der Umgebungsluftstrom mittels wenigstens eines Wärmetauschegebläses in Strömung versetzt wird, und die Leistung des Wärmetauschergebläses über das Gargerät in Abhängigkeit von wenigstens einem Prozeßwert als Steuergröße gesteuert wird.

Weiterhin betrifft die vorliegende Erfindung eine Vorrichtung zum Kondensieren von Inhaltsstoffen aus der Abluft eines Gargerätes, insbesondere eines Dampfgargerätes und Abführen der Flüssigkeit, mit einer Zuführleitung (3) der Abluft, einer Wärmetauschereinrichtung (5) und einer Abführleitung (7) des Kondensats, wobei die Wärmetauschereinrichtung (5) wenigstens eine, eine Kondensatorplatte (15, 16, 17, 18) bildende Hohlkammer (27, 28, 29, 30) aufweist, durch die die Abluft strömt, die mittels eines Umgebungsluftstromes, der um die Hohlkammer (27, 28, 29, 30) strömt, gekühlt wird, und wenigstens ein Gebläse (19) aufweist, durch das das Strömen der Umgebungsluft um die Hohlkammer (27, 28, 29, 30) erzeugt wird, wobei die Kondensationsvorrichtung (1) als kompakte Baueinheit ausgebildet ist, die an dem Gargerät anbringbar ist.

## Beschreibung

Die vorliegende Erfindung betrifft ein Verfahren und eine Vorrichtung zum Kondensieren von Inhaltsstoffen aus der Abluft eines Gargerätes, insbesondere eines Dampfgargerätes, und das Abführen der Flüssigkeit bzw. des Kondensats.

Weiterhin betrifft die vorliegende Erfindung ein Gargerät zum Garen von Lebensmitteln, das eine solche Vorrichtung aufweist.

Bei Gargeräten aller Art, insbesondere jedoch bei Dampfgargeräten entsteht während des Garvorganges zum Teil eine erhebliche Dampfmenge im Garraum bzw. wird bei gewissen Garstufen Feuchtigkeit in den Garraum zur Erzielung eines optimierten Garergebnisses zugeführt. Liegt am Ende des Garvorgangs eine erhebliche Dampfmenge im Garraum vor und wird die Garraumtür geöffnet, so entweicht die feuchte Abluft schlagartig in die Umgebung, was einerseits eine Gefahr für die Bedienungsperson darstellt und andererseits schädliche Auswirkungen auf die bauliche Umgebung um das Gargerät hervorruft.

Von der Anmelderin wurde deshalb ein Verfahren entwickelt (vgl. EP 0 937 400 B1), bei dem am Ende des Garvorgangs stets die Feuchtigkeit aus dem Garraum abgezogen wird. Dadurch wird vermieden, daß beim Öffnen der Garraumtür schädliche Feuchtigkeit austritt.

Die aus dem Garraum auszubringende Abluft wird in der Regel durch eine Öffnung am Boden des Garraums abgesaugt und in einen Bereich hinter dem Garraum geleitet, wobei eine teilweise Kondensation der Feuchtigkeit in der Abluft in dieser Leitung erfolgt. Danach wird die Abluft zur Rückseite oder Oberseite des Gargeräts geleitet und gelangt dort in die Umgebung, wobei zur weiteren Verringerung der Feuchtigkeit in der Abluft in dieser Abluftsteigleitung Sprüheinrichtungen zum Einsprühen von Wasser vorgesehen sein können. Dennoch reichen diese Maßnahmen in der Regel und insbesondere bei einer maximalen Entfeuchtung des Garraums am Garende, nicht aus, die Abluft vor Austritt in die Umgebung ausreichend zu Entfeuchten.

Der vorliegenden Erfindung liegt deshalb die Aufgabe zugrunde, sowohl ein Verfahren als auch eine Vorrichtung zum Kondensieren von Inhaltstoffen aus der Abluft eines Gargerätes, insbesondere eine Dampfgargerätes, und Abführen der Flüssigkeit zu schaffen, wodurch die in der Abluft vorhandene Restfeuchtigkeit weitestgehend ausgebracht wird, so daß die verbleibende Abluft gefahrlos an die Umgebung abgegeben werden kann und in dieser keine Beeinträchtigungen bzw. Beschädigungen entstehen.

Weiterhin liegt der vorliegenden Erfindung die Aufgabe zugrunde, ein entsprechend umweltfreundliches Gargerät zu schaffen.

Die vorliegenden Aufgaben werden durch die Merkmale der Ansprüche 1, 6 bzw. 25 gelöst.

Das erfindungsgemäße Verfahren weist die folgenden Schritte auf:
- Zuführen der Abluft über eine Zuführleitung zu einer Wärmetauschereinrichtung,
- Kondensieren von Inhaltsstoffen der Abluft, zumindest größtenteils, in der Wärmetauschereinrichtung mittels eines Umgebungsluftstromes, und
- Abführen der Abluft aus der Vorrichtung,
wobei der Umgebungsluftstrom mittels wenigstens eines Wärmetauschegebläses in Strömung versetzt wird, und die Leistung des Wärmetauschergebläses über das Gargerät in Abhängigkeit von wenigstens einem Prozeßwert als Steuergröße gesteuert wird.

Die erfindungsgemäße Vorrichtung weist eine Zuführleitung der Abluft, eine Wärmetauschereinrichtung, und eine Abführleitung des Kondensats auf. Die Wärmetauschereinrichtung weist wenigstens eine, eine Kondensatorplatte bildende Hohlkammer auf, durch die die Abluft strömt, die mittels eines Umgebungsluftstromes, der um die Hohlkammer strömt, gekühlt wird, und weist wenigstens ein Gebläse auf, durch das das Strömen der Umgebungsluft um die Hohlkammer erzeugt wird, wobei die Kondensationsvorrichtung als kompakte Baueinheit ausgebildet ist, die an dem Gargerät anbringbar ist.

Damit wird vorteilhafterweise sowohl ein wirksames Verfahren als auch eine wirksame Vorrichtung zum Kondensieren Inhaltsstoffen aus der Abluft eines Gargerätes geschaffen.

Die Vorrichtung ist dabei einfach aufgebaut und schafft eine wirksame Entfeuchtung der Abluft vor deren Ausbringung in die Umgebung ermöglicht.

Vorteilhafterweise können als Steuergrößen einzeln oder in Kombination verwendet werden:
- die Ablufttemperatur,
- die gewählte Betriebsart,
- die gewählte oder gemessene Feuchte im Garraum,
- die gewählte Entfeuchtung,
- die Lüfterdrehzahl des Garraumlüfters,
- die Temperatur im Garraum und/oder
- die Temperatur der Wärmetauschereinrichtung.

Beispielsweise kann über die Lüfterdrehzahl des Garraumlüfters die Gasaustauschmenge ermittelt werden.

Besonders vorteilhaft ist auch, daß die Prozeßwerte über die Steuerung/Regelung des Gargerätes zur Verfügung gestellt werden. Dies erübrigt zusätzliche Maßnahmen bzw. Einrichtungen.

Weiterhin ist vorteilhaft, daß die Ansteuerung des Wärmetauschergebläses erst beim Betrieb des Gargerätes erfolgt, wenn Feuchtigkeit anfällt, so daß das Verfahren entsprechend energiesparend ist.

Auch ist vorteilhaft, daß zur Nachkühlung des Gargerätes ein Nachlaufen des Gebläses erfolgt.

Auf besonders platzsparende vorteilhafte Weise kann die erfindungsgemäße Vorrichtung auf dem Gargerät angebracht werden und ist vorteilhafterweise mit einer als Abdeckhaube ausgebildeten Abdeckung abgedeckt, was ihre Wirksamkeit erhöht und sie vor dem Eindringen von Schmutz etc. schützt.

Dadurch, daß die Abdeckhaube eine Mehrzahl von Lüftungsschlitzen an ihrer Oberseite aufweist, kann die verbleibende Abluft auf einfachste Weise ausgebracht werden. Beispielsweise sind zwei Reihen von Lüftungsschlitzen vorgesehen, die sich entlang des Bereichs der Vorderseite und des Bereichs der Rückseite des Gargeräts erstrecken, wodurch ein gleichmäßiges und gut verteiltes Ausbringen der Abluft ermöglicht wird.

Weiterhin ist besonders vorteilhaft, daß die Abdeckhaube an die Außenkontur des Gargeräts angepaßt ist, wobei sie an der Seite der Öffnungstüre über das Gargerät vorspringt. Dadurch wird vorteilhafterweise erreicht, daß beim Öffnen der Garraumtür des Gargeräts die nach oben strömende Luft aus dem Garraum gezielt und gerichtet nach oben beispielsweise durch die Lüftungsschlitze ausgebracht werden kann.

Als besonderen Vorteil weist das Gebläse wenigstens einen, bevorzugt mehrere und vorzugsweise handelsübliche Lüfter auf, wodurch die erfindungsgemäße Vorrichtung kostengünstig verwirklicht wird. Bei handelsüblichen Lüftern kann es sich beispielsweise um Lüfter handeln, die in Computergehäuse eingesetzt werden, es sich also um eine äußert kostengünstige Massenware handelt.

Weiterhin ist vorteilhaft, daß das Gebläse so viele Lüfter aufweist, wie entlang der Breite des Gargeräts angeordnet werden können. Damit wird eine maximale Raumausnutzung verwirklicht, die eine besonders effektive Kühlung der Kondensatorplatte bzw. der Kondensatorplatten ermöglicht. Deshalb sind vorteilhafterweise auch mehreren als Hohlkammern ausgebildete Kondensatorplatten vorgesehen, die im wesentlichen übereinander geschichtet und mit einem bestimmten Abstand voneinander angeordnet sind. Damit wird erreicht, daß die Umgebungsluft mittels des Gebläses wirksam zwischen die Kondensatorplatten strömen kann, bei gleichzeitig kompakter Gesamtbauweise.

Ein fertigungstechnisch besonderer Vorteil ergibt sich dadurch, daß jede Hohlkammer aus zwei identischen Halbschalen gebildet ist, die miteinander luftdicht verbunden sind. Zwar kann die Form der Hohlkammern, wie später noch ausgeführt werden wird, variieren, dennoch ist es von großem Vorteil, wenn eine oder mehrere Hohlkammern aus identischen Halbschalen gebildet werden können. Die Halbschalen werden luftdicht miteinander verbunden, so daß die darin strömende Abluft nicht nach außen austreten kann. Vorteilhafterweise kann die Verbindung mittels Schweißen, Kleben, Nieten, oder einer jeglichen anderen geeigneten Verbindung erfolgen.

Mit Vorteil sind die Hohlkammern im wesentlichen viereckig ausgebildet. Damit folgen sie im wesentlichen der Form des Gargeräts und können entsprechend kompakt auf dem Gargerät angebracht werden.

Weiterhin ist vorteilhaft, daß die oberste Hohlkammer über die darunterliegende/n Hohlkammer/n in einem Eckenbereich vorspringt und in diesem Eckenbereich mit der Zuführleitung der Abluft verbunden ist. Damit wird erreicht, daß die Zuführleitung vertikal aufsteigend bis zum Anschluß an die Hohlkammer ausgebildet sein kann, wodurch die Abluft ungehindert, also ohne Umlenkung, aus dem Gargerät in die Hohlkammer eingebracht werden kann.

Vorteilhafterweise sind im Inneren der Hohlkammer wenigstens eine, vorzugsweise mehrere Ablenkeinrichtungen vorgesehen, wodurch die Abluft entlang ihres Strömungswegs in der Hohlkammer abgelenkt wird und ihr Strömungsweg dadurch verlängert wird. Dadurch wird der Verbleib der Abluft in der Kondensatorplatte erhöht und eine effizientere Kondensierung geschaffen.

Vorteilhafterweise sind der Ablufteinlaß und der Abluftauslaß einer Hohlkammer im wesentlichen diagonal gegenüberliegend und in jeweils einem Eckbereich der Hohlkammer angeordnet, wodurch ein längstmöglicher Strömungsweg in der Hohlkammer erzielt wird, insbesondere in Verbindung mit den Ablenkeinrichtungen. Diese können beispielsweise aus Ablenkstahlblechen gebildet sein, die mit der ebenfalls vorzugsweise aus Edelstahl gebildeten Hohlkammer auf geeignete Weise verbunden sind.

Weiterhin sind die Hohlkammern im wesentlichen parallel zueinander angeordnet, so daß vergleichbare Verhältnisse in den Hohlkammern vorliegen, insbesondere hinsichtlich der Strömungsgeschwindigkeit. Werden die Hohlkammern in Richtung der Abführleitung des Kondensats geneigt angeordnet, so wird das Abführen des Kondensats vollständig und effektiv ermöglicht.

Weiterhin wird vorteilhafterweise die Anzahl der tätigen Lüfter in Abhängigkeit von wenigstens einer Kenngröße aus dem Gargerät gesteuert. Dies bedeutet vorteilhafterweise, daß die erfindungsgemäße Vorrichtung keine zusätzlichen Steuer- oder Regelungseinrichtungen benötigt, und damit entsprechend kostengünstig realisierbar ist.

Als Kenngrößen können verwendet werden: die gemessene Feuchtigkeit im Garraum, die Temperatur im Garraum, die Temperatur der Abluft, die Betriebsart des Gargeräts und/oder die Temperatur der Kondensatorplatte/n.

Ebenfalls kann vorteilhafterweise die Steuerung der Lüfter, also beispielsweise ihre Drehzahl und damit ihre Leistung, über die Steuerung des Gargeräts erfolgen.

Vorteilhafterweise wird das Gebläse oberhalb der Türe des Gargeräts angeordnet. Dadurch wird für die Bedienungsperson besonders leicht erkennbar, ob das Gebläse arbeitet und gegebenenfalls welche Lüfter in Betrieb sind, wodurch eine Störung eines einzelnen Lüfters auch erheblich schneller erkannt wird. Alternativ kann das Gebläse beispielsweise auch seitlich angeordnet werden, beispielsweise wenn sich das Gargerät in der Nähe einer seitlichen Frischluftzufuhr befindet und diese Frischluftzufuhr dadurch schneller und wirksamer in die Vorrichtung gelangt.

Weiterhin ist vorteilhaft, daß unterhalb des Gebläses, wenn dieses oberhalb der Tür des Garraums angeordnet ist, eine im wesentlichen horizontal angeordnete, nach vorne vorspringende Spritzwasserschutzeinrichtung, vorzugsweise in Form eines Ablenkbleches vorgesehen ist. Bekannterweise werden Gargeräte regelmäßig mit Wassersprüheinrichtungen, wie Handbrausen, gereinigt und durch die Spritzwasserschutzeinrichtung wird verhindert, daß Reinigungswasser und gegebenenfalls auch Reinigungsflüssigkeit zu dem Gebläse gelangt und in dieses eindringen kann. Es ist ersichtlich, daß es besonders vorteilhaft ist, wenn nur Luft durch das Gebläse angesaugt wird.

Weitere Einzelheiten, Vorteile und Merkmale der Erfindung ergeben sich aus der nachfolgenden Beschreibung unter Bezugnahme auf die Zeichnung. Darin zeigt:
- Fig. 1: in schematischer, perspektifischer Ansicht eine Abdeckung, unter der sich die erfindungsgemäße Vorrichtung zum Kondensieren von Inhaltsstoffen aus der Abluft eines Gargerätes befindet;
- Fig. 2: eine ähnliche schematische, perspektifische Ansicht wie Fig. 1, jedoch mit nach oben abgehobener Abdeckung, zur Veranschaulichung der erfindungsgemäßen Vorrichtung;
- Fig. 3: eine perspektifische Ansicht auf die erfindungsgemäße Vorrichtung von Fig. 2 von links hinten, unter Weglassen der Abdeckung;
- Fig. 4: eine schräge Draufsicht von hinten oben auf die Wärmetauschereinrichtung der erfindungsgemäßen Vorrichtung;
- Fig. 5: eine perspektifische Ansicht auf die Kondensatorplatten der Wärmetauschereinrichtung der erfindungsgemäßen Vorrichtung;
- Fig. 6: eine Längsansicht auf die Kondensatorplatten der Wärmetauschereinrichtung der erfindungsgemäßen Vorrichtung von hinten; und
- Fig. 7: eine Seitenansicht der Kondensatorplatten der Wärmetauschereinrichtung der erfindungsgemäßen Vorrichtung gemäß Ansicht von rechts von Fig. 6.

In den nachfolgend beschriebenen Figuren sind gleiche Elemente mit gleichen Bezugsziffern bezeichnet.

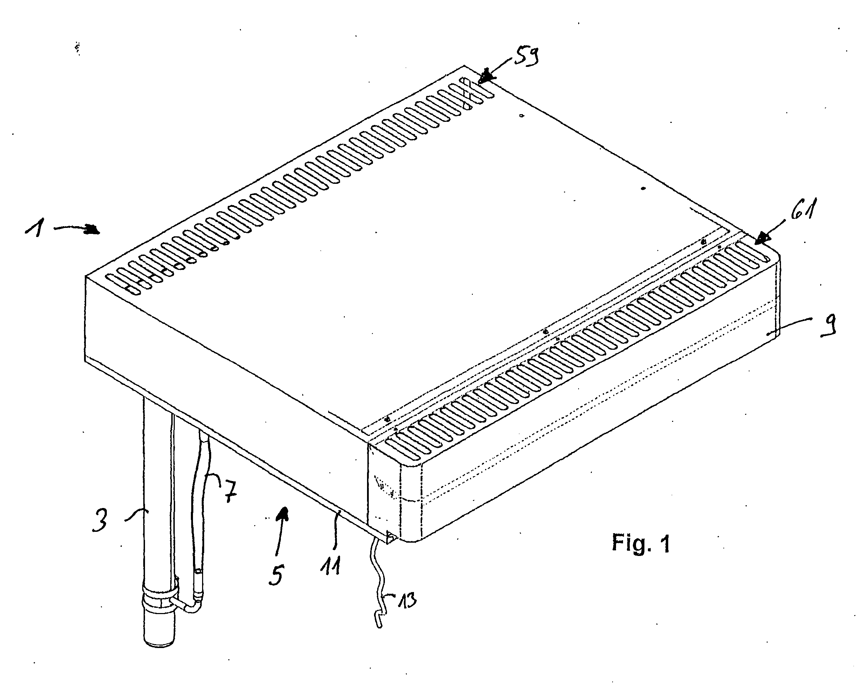

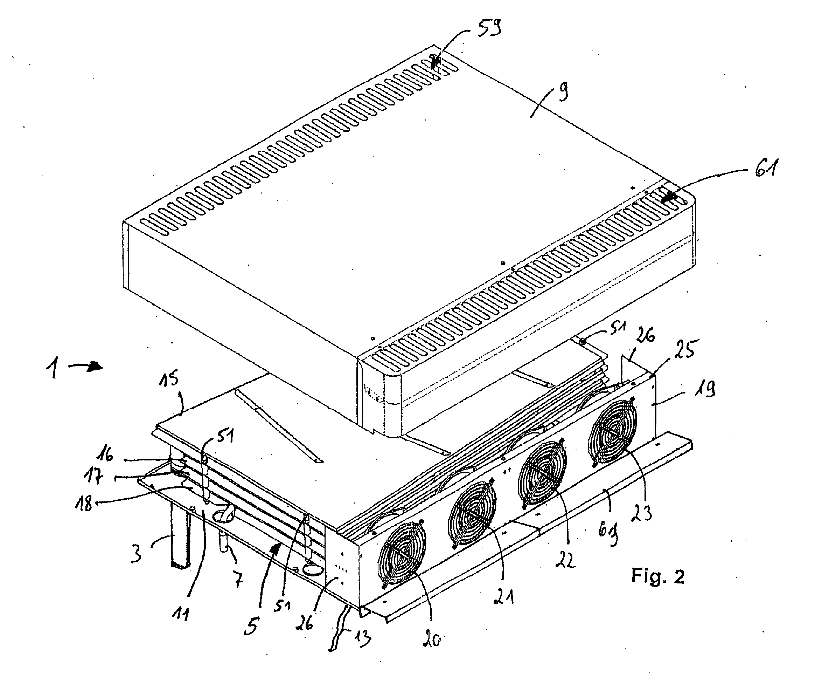

Fig. 1 zeigt in perspektifischer Ansicht eine erfindungsgemäße Vorrichtung 1 zum Kondensieren von Inhaltsstoffen aus der Abluft eines Gargerätes, die eine Zuführleitung 3 eine in Form einer Abdeckhaube ausgebildete Abdeckung 9 aufweist, unter der eine Wärmetauschereinrichtung 5 angeordnet ist, wie sie besser aus den Fig. 2 bis 7 ersichtlich ist. Die erfindungsgemäße Vorrichtung 1 weist weiterhin eine Abführleitung 7 des Kondensats auf.

Wie aus Fig. 1 ersichtlich, weist die erfindungsgemäße Vorrichtung weiterhin eine Bodenplatte 11 auf, die an den Seiten und an der Rückseite bündig mit der Abdekkung 9 abschließt. Der Frontabschnitt der Abdeckung 9 springt über die Bodenplatte 11 nach vorne hervor, wobei die Bodenplatte 11 so ausgebildet ist, daß sie bündig auf die Oberseite eines Gargeräts (nicht dargestellt) paßt. Über ein elektrisches Kabel 13 wird die erfindungsgemäße Kondensationsvorrichtung 1 mit Energie versorgt.

Wie aus Fig. 1 weiterhin ersichtlich, befindet sich die Zuführleitung 3 der Abluft im linken hinteren Eckenbereich der rechteckförmig ausgebildeten Kondensationsvorrichtung 1 und die Abführleitung 7 des Kondensats mündet in die Zuführleitung 3, in der ebenfalls Kondensat entsteht und nach unten abfließt.

In Fig. 2 ist die Abdeckung 9 gegenüber der Darstellung in Fig. 1 nach oben abgehoben, so daß sie den Blick auf das Innere der erfindungsgemäßen Kondensationsvorrichtung 1 freigibt. Wie aus Fig. 2 ersichtlich, weist die Wärmetauschereinrichtung 5 eine Mehrzahl von Kondensatorplatten 15, 16, 17 und 18 auf, also insgesamt vier Stück. Die Zuführleitung 3 mündet in der oberen Kondensatorplatte 15, wobei die Zuführleitung 3 aus einem geraden Rohr gebildet ist, und damit keine Umlenkung des Abluftstromes in dieser Zuführleitung 3 erfolgt. Aus der untersten Kondensatorplatte 18 tritt die Abführleitung 7 des Kondensats aus und das Kondensat wird wie oben beschrieben zur Zuführleitung 3 zurückgeführt.

An der Vorderseite der im wesentlichen rechteckförmigen erfindungsgemäßen Kondensationsvorrichtung 1 ist ein Gebläse 19 vorgesehen, das vier Lüfter 20, 21, 22 und 23 aufweist. Die Lüfter können handelsübliche Lüfter sein, wie sie beispielsweise zum Kühlen von Personalcomputern Verwendung finden. Da sie Massenartikel sind, sind sie besonders kostengünstig. Die vier Lüfter 20, 21, 22 und 23 sind in einer Gebläsewand 25 aufgenommen, an die seitliche Verblendungsabschnitte 26 angebracht sind.

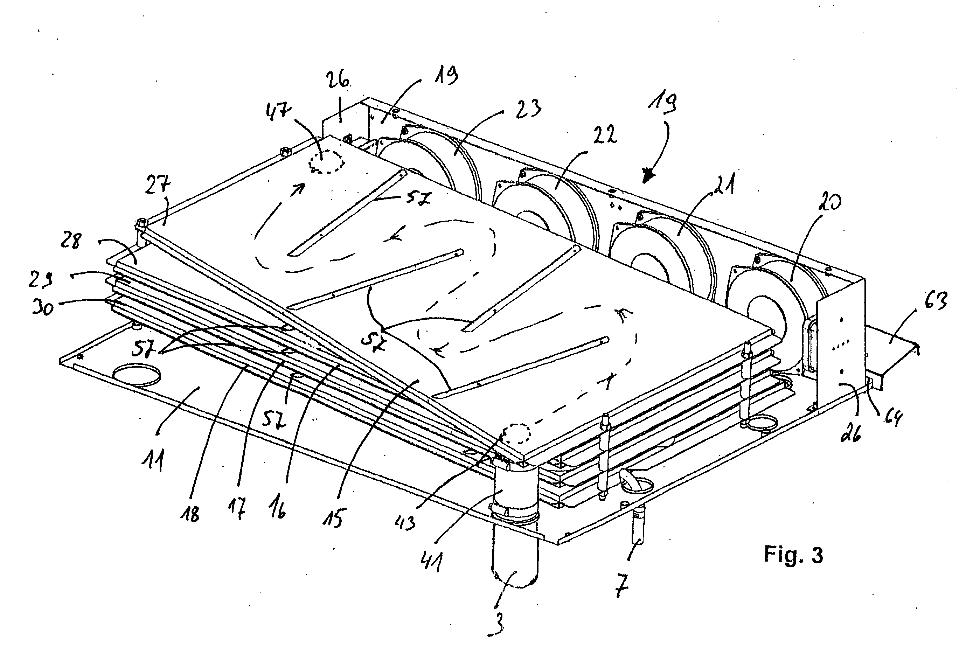

Bezugnehmend auf Fig. 3 wird nun die Ausgestaltung der erfindungsgemäßen Kondensationsvorrichtung 1 aus der Perspektive von links hinten beschrieben.

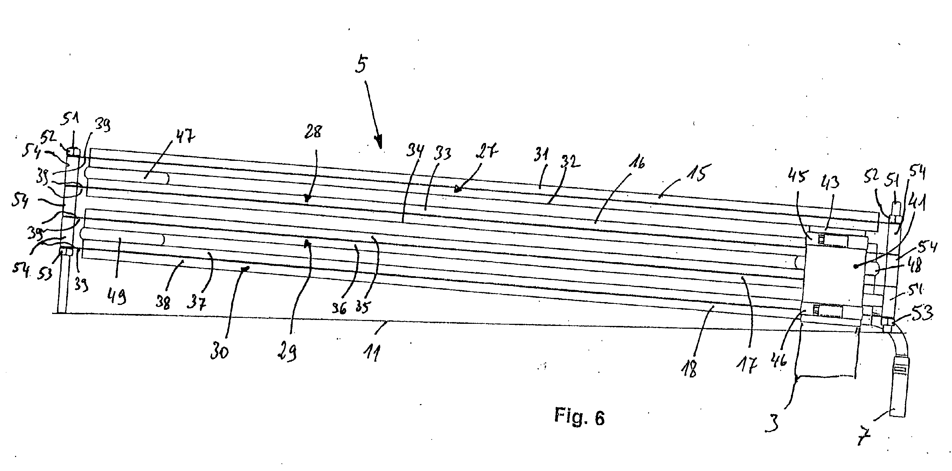

Die Kondensatorplatten 15, 16, 17 und 18 sind übereinander gestapelt und im wesentlichen parallel zueinander angeordnet, wobei sie im wesentlichen Rechteckform aufweisen bzw. viereckig sind. Wie insbesondere aus Fig. 6 ersichtlich weisen die Kondensatorplatten 15, 16, 17 und 18 jeweils Hohlkammern 27, 28, 29 und 30 auf, die aus im wesentlichen identischen Halbschalen gebildet sind. So ist die Hohlkammer 27 aus den beiden Halbschalen 31 und 32, die Hohlkammer 28 aus den beiden Halbschalen 33 und 34, die Hohlkammer 29 aus den beiden Halbschalen 35 und 36 und die Hohlkammer 30 aus den beiden Halbschalen 37 und 38 gebildet. Im dargestellten Ausführungsbeispiel weist die Wärmetauschereinrichtung 5 gleich ausgebildete Kondensatorplatten 16 und 17 auf, so daß auch die Hohlkammern 28 und 29 identisch ausgebildet sind und damit auch die Halbschalen 33, 34, 35 und 36.

In dem dargestellten Ausführungsbeispiel, wie insbesondere in Fig. 6 dargestellt, weist eine jede der Halbschalen einen an jeder Seite vorspringenden Verbindungsflansch auf, mit dem die Halbschalen miteinander luftdicht verbunden sind, und damit eine entsprechende luftdichte Hohlkammer 27, 28, 29 und 30 bilden. Die Verbindung kann auf jede geeignete Art geschaffen werden, beispielsweise durch Verschweißen, Vernieten, Verkleben und dergleichen. Wie aus Fig. 6 ersichtlich mündet die Zuführleitung 3 in einen Rohstutzen 41, der an einem Rohransatzstück 43 angeklemmt ist, das in Verbindung mit der unteren Halbschale 32 der Kondensatorplatte 15 ist. Das Anklemmen des Rohrstutzens 41 einerseits an dem Rohransatzstück 43 erfolgt mittels einer Schlauchklemme 45 und die Verbindung des Rohrstutzens 41 mit der Zuführleitung 3 erfolgt ebenfalls mittels einer Schlauchklemme 46.

Zur effektiven Entfeuchtung der durch die Zuführleitung 3 gelieferten Abluft aus dem Garraum durchströmt diese alle vier Kondensatorplatten 15, 16, 17 und 18. Die Verbindung zwischen Kondensatorplatte 15 und Kondensatorplatte 16 erfolgt über einen Zuführstutzen 47, die Verbindung zwischen Kondensatorplatten 16 und 17 erfolgt über einen Zuführstutzen 48 und die Verbindung zwischen Kondensatorplatten 17 und 18 erfolgt über einen Zuführstutzen 49. Wie in Fig. 6 dargestellt, sind diese Zuführstutzen aus nachgiebigen federnden gummielastischen Stutzen gebildet.

Wie weiterhin aus Fig. 6 ersichtlich, ist die Wärmetauschereinrichtung 5, also auch die Kondensatorplatten 15, 16, 17 und 18 schräg angeordnet, wobei der unterste Abschnitt der Kondensatorplatte in Verbindung steht mit der Abführleitung 7 des Kondensats. Wie aus Fig. 6 weiterhin ersichtlich, ist die Stapelung der Kondensatorplatten 15, 16, 17 und 18 auf einfache Weise ausgeführt. Die Stapelvorrichtung weist vier Gewindestangen 51 auf, mit jeweils einer oberen Mutter 52 und einer unteren Mutter 53. Wie aus Fig. 6 ersichtlich befinden sich die oberen und unteren Muttern 52 und 53 beim unterschiedlichen Stellen, zur Erzeugung der gewünschten Neigung der Kondensatorplatten 15, 16, 17 und 18. Auf der unteren Mutter 53 liegen die Verbindungsflansche 39 der Kondensatorplatte 18, wobei sie vorzugsweise entsprechende Bohrungen in diesen Bereichen aufweisen. Zwischen den Verbindungsflanschen 39 der Kondensatorplatte 18 und der Kondensatorplatte 17 sind um die Gewindestangen 51 Abstandshülsen 54 vorgesehen. Der gleiche Aufbau gilt für die Lagerung der Kondensatorplatten 16 und 15, wobei die Abstandshülsen 54 im Beispielsfalle gemäß Fig. 6 gleiche Länge aufweisen. Die Gewindestangen 51 ruhen auf der Bodenplatte 11.

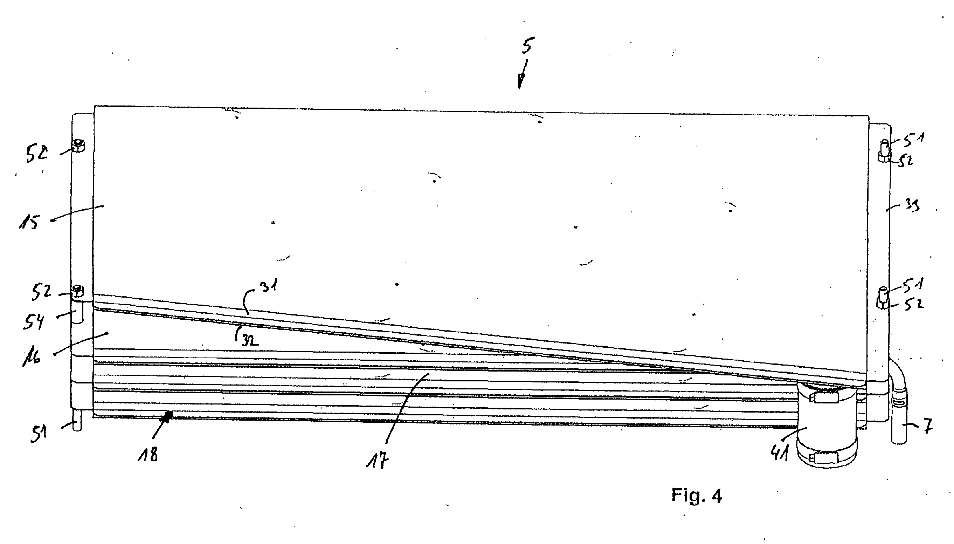

In Fig. 4 ist die Wärmetauschereinrichtung 5 in schräger Ansicht von hinten oben dargestellt. Die schräge hintere Kante der Kondensatorplatten 15 ergibt sich durch eine Optimierung des Blechzuschnitts aufgrund des überstehenden Eckenbereichs der Kondensatorplatte 15 zur Verbindung mit der Zuführleitung 3. Um identische Halbschalen 31 und 32 zu erhalten ergibt sich bei der Verarbeitung von Bandstahl diese entsprechend schräge Kontur.

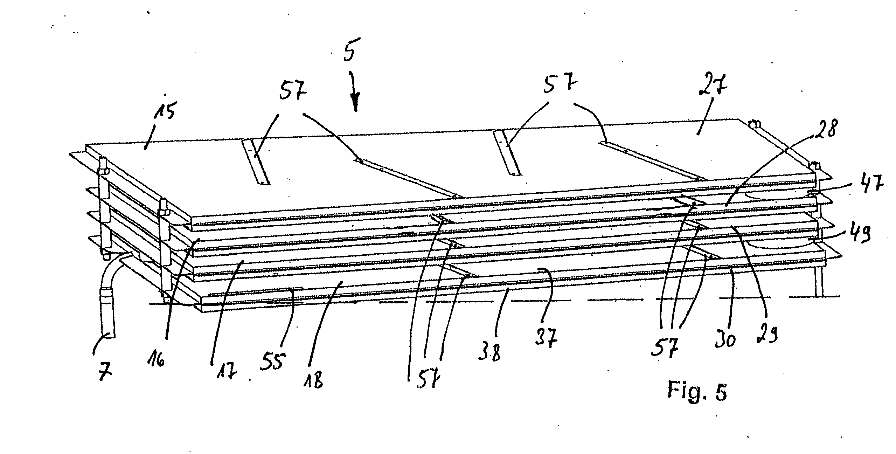

In Fig. 5 ist die Wärmetauschereinrichtung 5 von schräg vorne in perspektifischer Ansicht dargestellt, wobei das Gebläse gegenüber Fig. 2 entfernt wurde. Wie aus Fig. 5 ersichtlich, weist die unterste Kondensatorplatte 18 an ihrem unteren Endbereich in der oberen Halbschale 37 einen Lüftungsschlitz 55 auf, der für den Austritt der Abluft nach Durchlauf durch die Wärmetauschereinrichtung 5 dient. Schematisch sind in den Figuren 2, 3 und 5 weiterhin Ablenkeinrichtungen 57 dargestellt, die sich im Inneren der Hohlkammern 27, 28, 29 und 30 befinden.

Wie aus den Figuren 1 und 2 ersichtlich, weist die Abdeckung 9 zwei Reihen von Lüftungsschlitzen auf, nämlich eine hintere Reihe von Lüftungsschlitzen 59 und eine vordere Reihe von Lüftungsschlitzen 61. Die Lüftungsschlitze 59 und 61 erstrecken sich über die gesamte Stirn- bzw, Rückseite der Abdeckung 9.

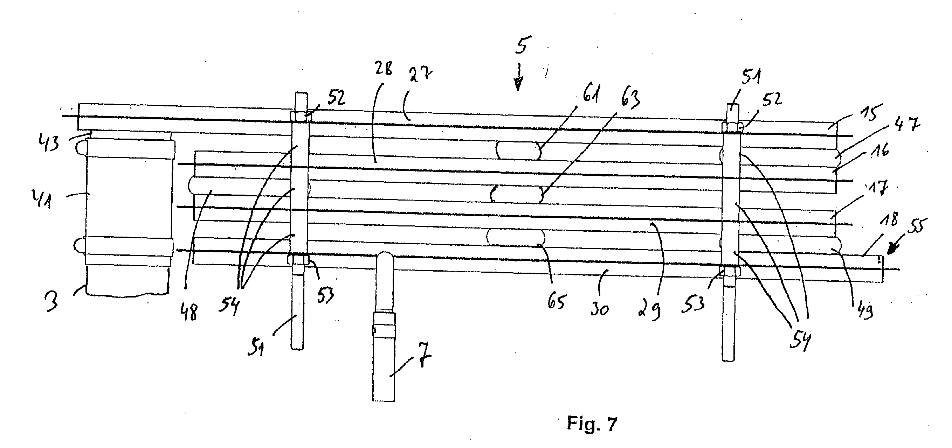

In Fig. 7 ist die Wärmetauschereinrichtung 5 von der rechten Seite gemäß Fig. 6 dargestellt. Wie ersichtlich, befindet sich der Zuführstutzen 47 zwischen Kondensatorplatte 15 und Kondensatorplatte 16 diagonal entgegengesetzt zum Rohransatzstutzen 43, durch die die Abluft in die Kondensatorplatte 15 eindringt. Der Zuführstutzen 48 befindet sich dann wiederum diagonal entgegengesetzt zum Zuführstutzen 47 und der Zuführstutzen 49 befindet sich unterhalb des Zuführstutzen 47 also wiederum diagonal entgegengesetzt zum Zuführstutzen 48. Zur Abführung des Kondensats sind Verbindungsstutzen 61, 63 und 65 vorgesehen, die sich auf der Seite der Abführleitung 7 befinden und ebenfalls als Gummimanschetten ausgebildet sind. Das Kondensat fließt dann aus der Kondensatorplatte 15 über den Stutzen 61 durch die Kondensatorplatte 16, den Stutzen 63, durch die Kondensatorplatte 17 und den Stutzen 65 in die Kondensatorplatte 18 und von dort in die Abführleitung 7.

Wie weiterhin aus Fig. 7 ersichtlich springt die Kondensatorplatte 18 in Richtung Vorderseite unter den darüberliegenden Kondensatorplatten 15, 16 und 17 vor, so daß die durch den Lüftungsschlitz 55 austretende entfeuchtete Abluft ungehindert nach oben strömen kann.

Die Funktionsweise der erfindungsgemäßen Kondensationsvorrichtung 1 wird nachfolgend beschrieben.

Die noch mit Feuchtigkeit bzw. Inhaltsstoffen behaftete Abluft strömt durch die Zuführleitung 3 über den Rohrstutzen 41 und den Rohransatzstutzen 43 in die obere Kondensatorplatte 15. Wie insbesondere aus Fig. 3 ersichtlich, bewegt sich die Abluft gemäß gestrichelter Linie vom Rohransatzstutzen 43 zum Zuführstutzen 47 um die Ablenkeinrichtungen 57 herum, wodurch ein möglichst langer Strömungsweg geschaffen wird, der zu einer Optimierung des Wärmetauschers führt. In den darunterliegenden Kondensatorplatten 16, 17 und 18 sind jeweils an den im wesentlichen gleichen Stellen Ablenkeinrichtungen 57 vorgesehen, so daß auch in diesen Kondensatorplatten ein möglichst langer Strömungsweg erzeugt wird. Das kondensierte Kondensat fließt über die Abführleitung 7 ab und die Abluft entweicht durch den Lüftungsschlitz 55, wobei sie in der Regel im wesentlichen auf Umgebungstemperatur abgekühlt wurde.

Der Kühleffekt erfolgt durch Einführen von Umgebungsluft mittels der Lüfter 20, 21, 22 und 23, wenn eine maximale Kühlleistung gewünscht wird. Abhängig von der gewünschten Kühlleistung, die auch geringer sein kann, werden, gesteuert vom Gargerät selbst, auch weniger als alle vier Lüfter betrieben, beispielsweise nur die Lüfter 21 und 22.

Zum Reinigen von Gargeräten werden häufig Handbrausen verwendet, mit denen Wasser oder Reinigungsflüssigkeit in den Garraum eingesprüht werden kann. Um zu Vermeiden, daß Reinigungsflüssigkeit in den Bereich der Lüfter 20 bis 23 gelangt, ist eine Spritzwasserschutzeinrichtung, im Beispielsfalle ein Ablenkblech 63 vorgesehen, das beispielsweise mit einem umgebogenen Rand 64 der Bodenplatte 11 verbunden ist.

Insgesamt wird somit eine sehr wirksame und kompakte Kondensationsvorrichtung geschaffen, mit der die gesamte oder nahezu die gesamte Feuchte bzw. Inhaltsstoffe aus der Abluft eines Gargeräts effektiv entfernt werden können.

Die vorliegende Erfindung ist nicht auf das dargestellte Ausführungsbeispiel beschränkt. Beispielsweise kann die erfindungsgemäße Vorrichtung als modulares System aufgebaut sein und mehrere Reihen von Gebläsen mit einer entsprechenden Mehrzahl von Lüftern aufweisen. Die Lüfterreihen können dabei in einer ersten Ausführungsform übereinander angeordnet sein und dazu dienen eine größere Anzahl von Kondensatorplatten zu kühlen.

Alternativ können Lüfterreihen auch an mehreren Seiten angeordnet sein. So kann beispielsweise eine oder mehrere Lüfterreihen an einer Seite der Kondensatorplatten angeordnet sein und eine oder mehrere Lüfterreihen an der gegenüberliegenden Seite. Die Lüfter an einer Seite arbeiten dabei blasend und diejenigen an der anderen Seite arbeiten saugend. Auch liegt eine Kombination vorgenannter Alternativen im Rahmen dieser Erfindung.

## Patentansprüche

1. Verfahren zum Kondensieren von Inhaltsstoffen aus der Abluft eines Gargerätes, insbesondere eines Dampfgargerätes, und Abführen der Flüssigkeit, mit den folgenden Schritten:
- Zuführen der Abluft über eine Zuführleitung zu einer Wärmetauschereinrichtung,
- Kondensieren von Inhaltsstoffen der Abluft, zumindest größtenteils, in der Wärmetauschereinrichtung mittels eines Umgebungsluftstromes, und
- Abführen der Abluft aus der Vorrichtung,
wobei der Umgebungsluftstrom mittels wenigstens eines Wärmetauschegebläses in Strömung versetzt wird, und die Leistung des Wärmetauschergebläses über das Gargerät in Abhängigkeit von wenigstens einem Prozeßwert als Steuergröße gesteuert wird.

2. Verfahren nach Anspruch 1, **dadurch gekennzeichnet, daß** als Steuergrößen einzeln oder in Kombination verwendet werden können:
- die Ablufttemperatur,
- die gewählte Betriebsart,
- die gewählte oder gemessene Feuchte im Garraum,
- die gewählte Entfeuchtung,
- die Lüfterdrehzahl des Garraumlüfters,
- die Temperatur im Garraum und/oder
- die Temperatur der Wärmetauschereinrichtung.

3. Verfahren nach Anspruch 1 oder 2, **dadurch gekennzeichnet, daß** die Prozeßwerte über die Steuerung/Regelung des Gargerätes zur Verfügung gestellt werden.

4. Verfahren nach einem der Ansprüche 1 bis 3, **dadurch gekennzeichnet, daß** die Ansteuerung des Wärmetauschergebläses erst beim Betrieb des Gargerätes erfolgt, wenn Feuchtigkeit anfällt.

5. Verfahren nach einem der Ansprüche 1 bis 4, **dadurch gekennzeichnet, daß** zur Nachkühlung des Gargerätes ein Nachlaufen des Gebläses erfolgt.

6. Vorrichtung zum Kondensieren von Inhaltsstoffen aus der Abluft eines Gargerätes, insbesondere eines Dampfgargerätes und Abführen der Flüssigkeit, mit einer Zuführleitung (3) der Abluft, einer Wärmetauschereinrichtung (5) und einer Abführleitung (7) des Kondensats, wobei die Wärmetauschereinrichtung (5) wenigstens eine, eine Kondensatorplatte (15, 16, 17, 18) bildende Hohlkammer (27, 28, 29, 30) aufweist, durch die die Abluft strömt, die mittels eines Umgebungsluftstromes, der um die Hohlkammer (27, 28, 29, 30) strömt, gekühlt wird, und wenigstens ein Gebläse (19) aufweist, durch das das Strömen der Umgebungsluft um die Hohlkammer (27, 28, 29, 30) erzeugt wird, wobei die Kondensationsvorrichtung (1) als kompakte Baueinheit ausgebildet ist, die an dem Gargerät anbringbar ist.

7. Vorrichtung nach Anspruch 6, **dadurch gekennzeichnet, daß** sie auf dem Gargerät anbringbar ist und mit einer vorzugsweise als Abdeckhaube ausgebildeten Abdeckung (9) abgedeckt ist.

8. Vorrichtung nach Anspruch 7, **dadurch gekennzeichnet, daß** die Abdeckung (9) eine Mehrzahl von Lüftungsschlitzen (59, 61) an ihrer Oberseite aufweist.

9. Vorrichtung nach Anspruch 7 oder 8, **dadurch gekennzeichnet, daß** die Abdeckung (9) an die Außenkontur des Gargeräts derart angepaßt ist, daß sie nach Aufbringung auf das Gargerät an der Seite der Öffnungstüre des Gargeräts über dieses vorspringt.

10. Vorrichtung nach einem der Ansprüche 6 bis 9, **dadurch gekennzeichnet, daß** das Gebläse (19) wenigstens einen, bevorzugt mehrere und vorzugsweise handelsübliche Lüfter (20, 21, 22, 23) aufweist.

11. Vorrichtung nach Anspruch 10, **dadurch gekennzeichnet, daß** das Gebläse (19) so viele Lüfter aufweist, wie entlang der Breite des Gargerätes angeordnet werden können.

12. Vorrichtung nach einem der Ansprüche 6 bis 11, **dadurch gekennzeichnet, daß** mehrere Kondensatorplatten (15, 16, 17, 18) vorgesehen sind, die im wesentlichen übereinander geschichtet mit einem bestimmen Abstand voneinander angeordnet sind.

13. Vorrichtung nach einem der Ansprüche 6 bis 12, **dadurch gekennzeichnet, daß** jede Hohlkammer (27, 28, 29, 30) aus zwei identischen Halbschalen (31, 32, 33, 34, 35, 36, 37, 38) gebildet ist, die miteinander luftdicht verbunden sind (39).

14. Vorrichtung nach einem der Ansprüche 6 bis 13, **dadurch gekennzeichnet, daß** die Kondensatorplatten (15 bis 18) im wesentlichen viereckig ausgebildet sind.

15. Vorrichtung nach einem der Ansprüche 6 bis 14, **dadurch gekennzeichnet, daß** die oberste Kondensatorplatte (15) über die darunterliegende/n Kondensatorplatte/n in einem Eckenbereich vorspringt und in diesem Eckenbereich mit der Zuführleitung (3) der Abluft verbunden ist.

16. Vorrichtung nach einem der Ansprüche 6 bis 15, **dadurch gekennzeichnet, daß** die Hohlkammer (27, 28, 29, 30) in ihrem Inneren wenigstens eine, vorzugsweise mehrere Ablenkeinrichtungen (57) aufweist, wodurch die Abluft entlang des Strömungswegs in der Hohlkammer (27, 28, 29, 30) abgelenkt und ihr Strömungsweg dadurch verlängert wird.

17. Vorrichtung nach einem der Ansprüche 6 bis 16, **dadurch gekennzeichnet, daß** der Ablufteinlaß und der Abluftauslaß einer Hohlkammer (27, 28, 29, 30) im wesentlichen diagonal gegenüberliegend und in jeweils einem Eckbereich der jeweiligen Hohlkammer angeordnet ist.

18. Vorrichtung nach einem der Ansprüche 6 bis 17, **dadurch gekennzeichnet, daß** die Hohlkammern (27, 28, 29, 30) im wesentlichen parallel zueinander angeordnet sind.

19. Vorrichtung nach einem der Ansprüche 6 bis 18, **dadurch gekennzeichnet, daß** die Hohlkammern (27, 28, 29, 30) in Richtung der Abführleitung (7) des Kondensats geneigt angeordnet sind.

20. Vorrichtung nach einem der Ansprüche 10 bis 19, **dadurch gekennzeichnet, daß** die Anzahl der tätigen Lüfter in Abhängigkeit von wenigstens einer Kenngröße aus dem Gargerät steuerbar ist.

21. Vorrichtung nach Anspruch 20, **dadurch gekennzeichnet, daß** als Kenngröße die gemessene Feuchtigkeit im Garraum, die Temperatur im Garraum, die Temperatur der Abluft, die Betriebsart des Gargeräts und/oder die Temperatur der Kondensatorplatte/n dient.

22. Vorrichtung nach Anspruch 21, **dadurch gekennzeichnet, daß** die Steuerung der Lüfter (20, 21, 22, 23) über die Steuerung des Gargeräts erfolgt.

23. Vorrichtung nach einem der Ansprüche 6 bis 22, **dadurch gekennzeichnet, daß** das Gebläse (19) oberhalb der Türe des Gargeräts anordenbar ist.

24. Vorrichtung nach Anspruch 23, **dadurch gekennzeichnet, daß** unterhalb des Gebläses (19) eine im wesentlichen horizontal nach vorne vorspringende Spritzwasserschutzeinrichtung vorzugsweise in Form eines Ablenkbleches (63) vorgesehen ist.

25. Gargerät zum Garen von Lebensmitteln, **dadurch gekennzeichnet, daß** es eine Vorrichtung zum Kondensieren von Flüssigkeit aus der Abluft eines Gargerätes nach einem der Ansprüche 1 bis 19 aufweist.
